# EUROPEAN PATENT SPECIFICATION

(11) **EP 2 170 040 B1**
(45) Date of publication and mention of the grant of the patent: **17.02.2016**
(21) Application number: 08775017.0
(22) Date of filing: 11.07.2008
(51) Int. Cl.: A01M 21/04

(54) **METHOD AND DEVICE FOR KILLING WEEDS**
VERFAHREN UND VORRICHTUNG ZUR UNKRAUTVERNICHTUNG
PROCÉDÉS ET DISPOSITIFS POUR TUER DES MAUVAISES HERBES

(30) Priority: 20.07.2007 DK 200701071
(43) Date of publication of application: 07.04.2010
(73) Proprietor: Force Technology, 2605 Brøndby (DK)
(72) Inventor: KREBS, Niels, DK-2900 Hellerup (DK); KRUSE, Jesper, DK-4700 Næstved (DK)
(74) Representative: Zacco Denmark A/S
(86) International application number: PCT/EP2008/059100
(87) International publication number: WO 2009/013154

(56) References cited:
- EP-A- 1 038 440
- WO-A-02/078751
- WO-A1-2008/106970
- DE-U1- 20 117 163
- US-A- 5 974 728

## Description

### FIELD OF THE INVENTION

The present invention relates to a method of and a device for withering, scalding, damaging and/or killing weeds and/or other unwanted plants, or vegetation by surface treatment thereof by use of steam.

The process of withering, scalding, damaging and/or killing is in the following referred to as treatment. By such a treatment is to be understood any treatment that helps towards killing or damaging plants, weeds, and/or vegetation being treated.

By steam is to be understood any type of a vaporized liquid, a gas, and/or a droplet containing mixture thereof, at an appropriate temperature and pressure.

### BACKGROUND OF THE INVENTION

Unwanted growth of weeds, plants and/or other vegetation (in the following only referred to as vegetation) often takes place on ground surfaces that are designated or preferred to be devoid of vegetation e.g. road sides, road paving, railway tracks and beds, pavements, courtyards, other narrow slots between paving stones, etc.

Furthermore, care should also be taken when treating unwanted vegetation interspaced between or surrounding desirable vegetation (e.g. crops, plants, trees, etc.) without damaging the desirable vegetation. Such areas can not, or at least only with some difficulty, be treated by common methods. This could be both outdoor or in open spaces, like fruit plantations, horticultural farms, etc., and indoor or within a confined space, like greenhouses, etc.

Common methods for decimating and eliminating, i.e. treating unwanted vegetation on ground surfaces include use of chemical weed killers like pesticides, herbicides, etc., scorching by gas burners, or scalding by heated steam.

Weed killers are chemical agents that due to their toxicity towards given plant species will kill them either immediately or after a period of time, e.g. a week or two.

Gas burners are used to scorch the vegetation, thereby killing it immediately or causing it to wither within typically one or a few days.

However, depending on their efficacy and durability these common methods and treatments usually have to be repeated within certain time intervals of one to three months or even within weeks. Furthermore, such methods and treatments may cause unwanted side effects to the fauna and flora on ground surfaces and their environments.

Such common methods and treatments may also show a limited or less than desired effect during a given period of treatment time. Furthermore, the effect may last only for a more limited period of time and therefore will have to be repeated more often with ensuing renewed operation costs.

Additionally, there may be some systemic shortcomings that prevent and hinder use in a number of circumstances.

For example, herbicides may not only be toxic to vegetation but also to other living species like desirable vegetation, fish, algae, and other water-based life as well as to mammals. Accidental exposure to workers and bystanders carry a further potential toxic exposure risk or even personal danger.

Accumulations of herbicide material and metabolic residues in the soil and in water sources, lakes, and rivers are recognized as further dangers to the environment and the environmental balance in nature.

Additionally, certain plant species, e.g. broadleaf plantain, giant hogweed, etc., are very resistant to herbicides and therefore require other treatments in order to be efficiently killed or removed.

Use of gas burners, although being a non-polluting treatment, tends to give diffuse boundaries of treated areas thereby risking harm to surrounding desired vegetation.

A steam treatment, also a non-polluting treatment, will wither the plant vegetation due to heat affecting the plant tissue. However, in order to achieve an acceptable effect, an application device comprising the steam treatment device normally only will be able to proceed at a relative slow speed of only 1 - 3 km/h and the treatment will have to be repeated several times during a summer season. Additionally, excessive steam consumption may also be an undesirable shortcoming. In addition, traditional steam treatment typically has deficient and limited effects towards weeds growing in narrow slots between paving stones on roads, road sides, pavements and courtyards.

Additionally, traditional steam treatment alone is not regarded as capable to decimate giant hogweed and Japanese knotweed. In the UK, the latter invasive species is regarded as one of the biggest threats to indigenous vegetation, even bigger than giant hogweed. Both invasive species require multi-year treatments of up to seven years duration using glyphosate and/or manual digging out and destroying seeds and root pieces (> 3 - 6 mm) in order to achieve a permanent erasure.

WO 02/078751 discloses a method for combatting germs on the surface of products, in particular of food products. The apparatus employs a combination of steam and ultrasound to kill germs on the surface of a product which is conveyed past the steam device

EP1038440-A discloses a method of damaging and/or killing plant vegetation by surface treatment thereof, which comprises the step of treating an area comprising plant vegetation to be treated by applying steam of a gas to at least a part of said surface area.

Intermediate application WO2008/1096970 discloses a weed control vehicle with a burner using combustible gas of liquid to generate heat that damages the weed. A number of possibilities for enhancing the sensitivity of a plant to heat exposure are mentioned, one of which is application of ultrasound while another is pressurised steam.

Thus a more efficient and thorough steam treatment is needed in order to address treating such weeds.

### SUMMARY OF THE INVENTION

It is an object of the present invention to provide a method of and a device for withering, scalding, damaging, killing and/or the like (i.e. treating) weeds, and/or other unwanted plant vegetation that alleviates the abovementioned shortcomings, at least to an extent.

It is a further object to provide an efficient method of and a device for withering, scalding, damaging and/or killing (i.e. treating) weeds and/or other unwanted plant vegetation by surface treatment thereof by use of steam.

An additional object is to facilitate protection of desirable vegetation, such as in environmentally sensitive surroundings, desirable crops, trees, etc., interspaced between or surrounding or being adjacent to the weeds, and/or other unwanted plant vegetation to be treated.

These objectives are obtained at least to an extent by a method of damaging and/or killing plant vegetation by surface treatment thereof according to claim 1, the method comprising treating an area comprising plant vegetation to be treated, wherein the treating comprises applying steam of a gas to at least a part of said surface area, and applying high intensity and high power acoustic waves to at least a part of said surface area, where at least a part of said applied steam and at least a part of said applied acoustic waves are brought to coincide within said surface area thereby damaging and/or killing at least a part of said plant vegetation.

In this way, a very efficient withering, scalding, damaging and/or killing (i.e. treating) weeds and/or other unwanted plant vegetation using a surface treatment by steam is obtained since the high intensity and high power acoustic waves will ensure that more heat of the steam will be in contact with the unwanted vegetation and that the heat will penetrate deeper into the tissue of the treated vegetation.

The combination of applied steam and high intensity and high power acoustic waves to the weeds and/or unwanted plant vegetation increases and enhances the withering, scalding, damaging, scorching and weed killing effect of the steam. This provides a more efficient treatment effect to be obtained for the same time span or even a somewhat shorter time span as compared with previously known steam treatments. Correspondingly, a similar treatment effect compared to previously known steam treatments can be obtained in a shorter time span.

The more efficient treatment effect provides for a faster withering, scalding, damaging, and/or killing effect that also will penetrate deeper into the weed or unwanted plant structure thereby delaying the ability of a repeated or renewed growth, and possibly killing the weed and/or plant structure and its sub-surface roots entirely.

The obtained more efficient treatment effect also enables that a period between repeated applications of the process is prolonged compared to traditional steam treatments.

The combination of steam and high intensity and high power acoustic waves provide efficacies that otherwise only could be achieved by treatments involving gas burners and/or chemical pesticide and herbicide agents but without side effects of these types of treatments.

Thus efficient use of steam energy at a mono-molecular surface layer of a weed and/or unwanted vegetation is enabled with a low consumption of water or gaseous medium and energy due to the enhanced efficiency, where the treatment is harmless to the environment since no toxic substances are transferred to the ground, no damages are imposed on surroundings and surrounding vegetation and no fire risks will be encountered.

In one embodiment, the high intensity and high power acoustic waves are ultrasonic acoustic waves. Ultrasonic acoustic waves are less damaging to humans than sonic ones and will often be simpler to dampen and/or reflect. Alternatively, the acoustic waves can have audible or sonic frequencies. The high intensity and high power acoustic waves may have a main or primary frequency between about 8 kHz and 70 kHz, between about 16 kHz and 50 kHz, or about between 20 kHz and 40 kHz. Alternatively, the main or primary frequency may be different.

According to the invention, the high intensity and high power acoustic waves are generated by a high intensity and high power acoustic wave generator and have an acoustic sound pressure level at approximately 10 cm from the orifice of said generator of at least 120 dB, and preferably selected from the group of: at least 140 dB, at least 160 dB, approximately 120 to approximately 165 dB, and approximately 120 to approximately 180 dB.

Typically, a sound pressure level of at least 120 dB is sufficient to have an improvement on the steam treatment, where higher pressures may give further improvements.

In one embodiment, the steam is aqueous steam. A relatively small amount of aqueous steam is able to transfer a high amount of heat energy, has only a low cost and leaves only harmless water as its residue.

In one embodiment, the steam and the high intensity and high power acoustic waves are applied by the same device. This enables a more compact design of a treatment device. Furthermore, for some types of devices or generators (Hartmann, Lavavasseur whistle design types, etc.) the steam is also used to generate the acoustic waves avoiding the need for an additional driving force.

In one embodiment, the steam and the high intensity and high power acoustic waves are generated and applied by different devices.

In one embodiment, a treatment period of time is selected from the group of: ¼ to 15 seconds, and ½ to 3 seconds.

In one embodiment, the high intensity and high power acoustic waves are generated by at least one high intensity and high power acoustic wave generator. In one embodiment, the at least one high intensity and high power acoustic wave generator (100; 301) is located on a mobile unit.

In one embodiment, the at least one high intensity and high power acoustic wave generator is mounted in a frame construction comprising an open chamber reducing a dissipation rate of said steam from said frame construction. The open chamber allows the steam to work as a wet and hot 'blanket' on the vegetation for an extended time and will in turn save on steam consumption. Additionally, the frame may also retain a high amount of acoustic energy within the device/frame.

The present invention also relates to a device corresponding to the method of the present invention. More specifically, the invention relates to a device for damaging and/or killing plant vegetation by surface treatment thereof according to claim 11, the device comprising a steam applicator adapted to, during use, to apply steam of a gas to at least a part of an area comprising plant vegetation to be treated, and at least one high intensity and high power acoustic wave generator adapted, during use, to apply high intensity and high power acoustic waves to at least a part of said surface area, wherein at least a part of said applied steam and at least a part of said applied acoustic waves are brought to coincide within said surface area thereby damaging and/or killing at least a part of said plant vegetation.

Advantageous embodiments of the device are defined in the sub-claims and are described in detail in the following. The embodiments of the device correspond to the embodiments of the method and have the same advantages for the same reasons.

### BRIEF DESCRIPTION OF THE DRAWINGS

These and other aspects of the invention will be apparent from and elucidated with reference to the illustrative embodiments shown in the drawings, in which:
Figure 1 schematically illustrates a generalized embodiment of the present invention;
Figure 2a schematically illustrates a (turbulent) flow over a surface of a weed or the like without application of high intensity and high power acoustic waves;
Figure 2b schematically illustrates a flow over a surface of a weed or the like, where the effect of applying high intensity and high power acoustic waves to/in gas surrounding or contacting the surface;
Figure 3a schematically illustrates an embodiment of a device for generating high intensity and high power acoustic waves;
Figure 3b shows an embodiment of a high intensity and high power acoustic wave device in form of a disc-shaped disc jet;
Figure 3c is a sectional view along the diameter of the high intensity and high power acoustic wave device (301) in Figure 3b illustrating the shape of the opening (302), the gas passage (303) and the cavity (304) more clearly;
Figure 3d illustrates an alternative embodiment of a high intensity and high power acoustic wave device, which is shaped as an elongated body;
Figure 3e shows a high intensity and high power acoustic wave device of the same type as in Figure 3d but shaped as a closed curve;
Figure 3f shows a high intensity and high power acoustic wave device of the same type as in Figure 3d but shaped as an open curve;
Figure 3g illustrates an alternative embodiment of a high intensity and high power acoustic wave device, which is shaped as an elongated body; and
Figure 4 schematically illustrates one embodiment of a unit comprising a device for weed killing according to the present invention.

Throughout the figures, same reference numerals indicate similar or corresponding features.

### DESCRIPTION OF PREFERRED EMBODIMENTS

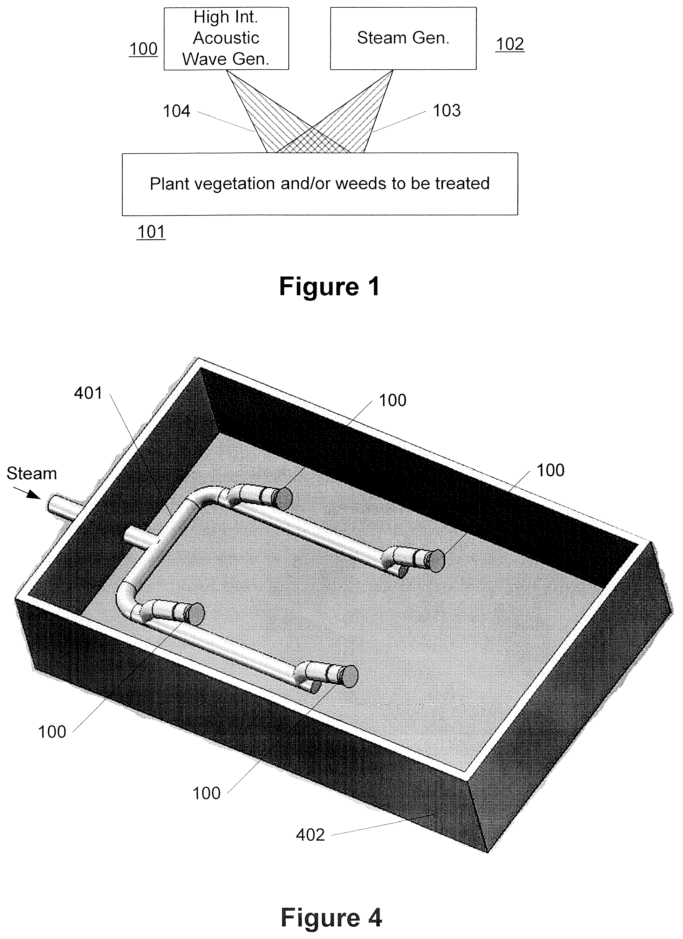

Figure 1 schematically illustrates a general embodiment of the present invention. Schematically illustrated is an area (101) comprising weeds and/or other unwanted plant vegetation (forth only denoted vegetation) that is to be treated according to the present invention in order to be withered, scalded, damaged and/or killed. The area (101) is e.g. an area that are designated or preferred to be devoid of vegetation like for instance road sides, road paving, railway tracks and beds, pavements, courtyards, other narrow slots between paving stones, etc. The area (101) can also e.g. be an area with unwanted vegetation interspaced between or surrounding desirable vegetation (e.g. crops, plants, trees, etc.). The area (101) can both be outdoor or in open spaces, like fruit plantations, horticultural farms, etc., and indoor or within a confined space, like greenhouses, etc.

Further illustrated are a high intensity and high power acoustic wave generator (100) and a steam generator (102).

The generated high intensity and high power acoustic waves (104) and steam (103) is applied to at least a part of the area (101) in such a way that the steam (103) and acoustic waves (104) coincide at least for a part of the area (101) whereby the acoustic waves (104) considerably enhances the weed or plant withering, scalding, damaging and/or killing efficiency or in short, the treatment efficiency of the steam.

The acoustic waves will cause the steam molecules or steam droplets to oscillate at the frequency and with the intensity and power of the acoustic waves and energy is thus supplied very efficiently to the steam by the acoustic waves.

In one embodiment, the applied acoustic waves are ultrasonic. Ultrasonic acoustic waves are less damaging to humans than sonic ones and will often be simpler to dampen and/or reflect. Alternatively, the acoustic waves can have audible or sonic frequencies.

The steam (103) may e.g. be aqueous steam and can be any type of a vaporized liquid, a gas, and/or a droplet containing mixture thereof, at an appropriate temperature and pressure.

And additional beneficial effect of applying the high intensity and high power acoustic waves are that they will diminish or remove the presence of a so-called laminar sub-layer that will exist next to the plant surface when surrounded by a turbulent gas. Such a laminar sub-layer will hinder the heat and energy transfer between the steam and the plant surface and thus limit the efficiency of the weed or plant killing or damaging power of the steam. Such a laminar sub-layer will also reduce the penetration depth in the plant surface of the applied heat.

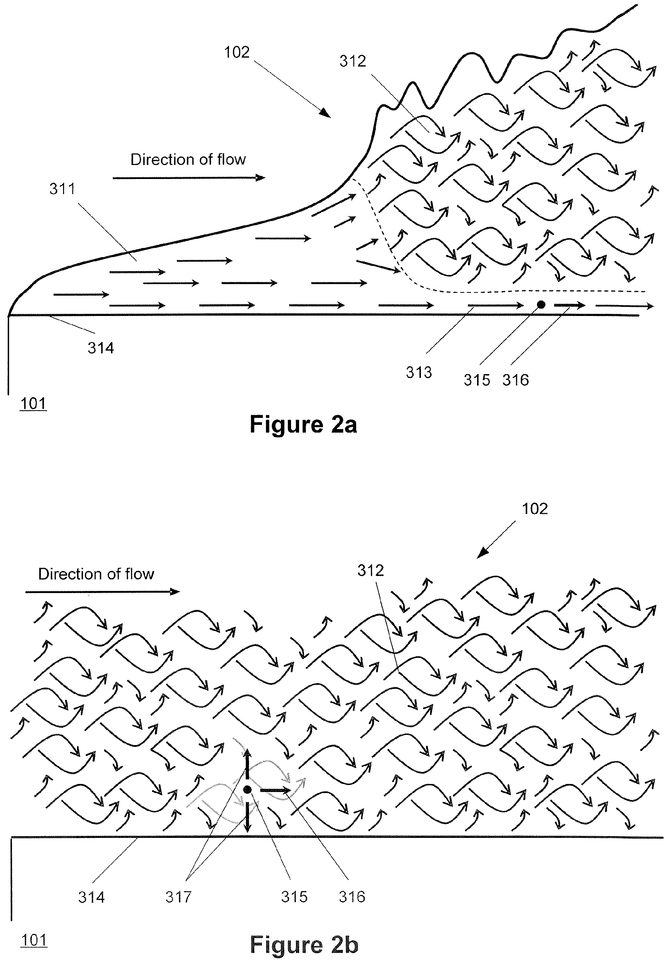

For nearly all practically occurring gas flows around a solid object such as a plant, the flow regime will be turbulent in the entirety of the flow volume; except for a layer covering all surfaces wherein the flow regime is laminar (see e.g. 313 in Figure 2a). This layer is often referred to as the laminar or boundary sub-layer. The thickness of this layer is a decreasing function of the Reynolds number of the flow, i.e. at high flow velocities, the thickness of the laminar sub-layer will decrease.

Mass transport across the laminar sub-layer will be solely by diffusion. Decreasing the thickness of the laminar layer will typically enhance mass transport significantly.

This will be the case when high intensity and high power (ultrasonic) acoustic waves are applied to the surface of a weed or plant. The high intensity and high power (ultrasonic) acoustic waves increase the interaction between the steam molecules and the surface of the weed or plant and thus the energy exchange at the surface.

Reducing/minimizing the laminar sub-layer provides increased diffusion and reaction speed. Additionally, reducing/minimizing the laminar sub-layer improves the probability of collision between steam molecules (102) and surface of the plant or weed.

This will be explained in greater detail in connection with Figures 2a and 2b.

It is to be understood that one or more acoustic wave generators (100) and/or one or more steam generators (102) may be used.

The acoustic wave generator(s) (100) may be of any type capable of delivering a sound pressure level sufficient for enhancing the steam's weed or plant decimating effect. A sufficient sound pressure level has been found to be about 120 dB (at 10 cm from the orifice of the generator) and above.

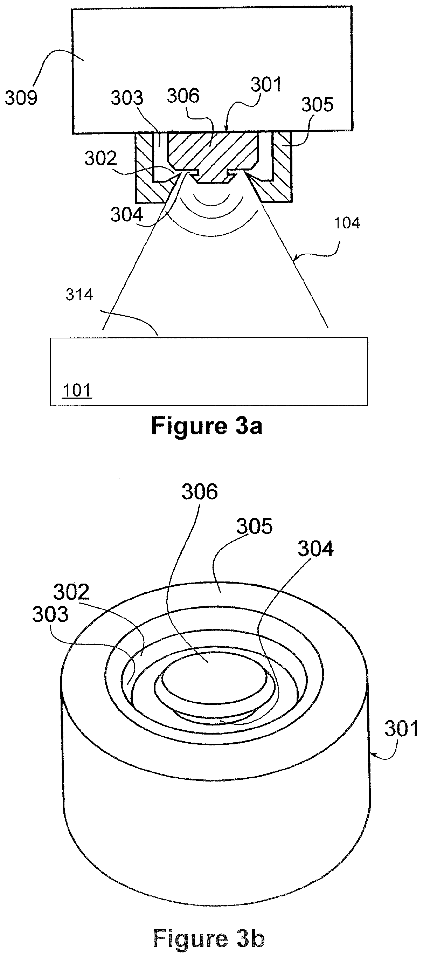

Examples of such generators (100) are e.g. the so-called Hartmann disc, stem, or slot jet type where the steam itself may be used to generate the (ultrasonic) high intensity and high power acoustic waves as e.g. shown and explained in connection with Figures 3a - 3g. Another usable type is the so-called Lavavasseur whistle design type.

Figure 2a schematically illustrates a (turbulent) flow over a surface of a liquid or liquid droplet without application of high intensity and high power ultrasonic acoustic waves.

Schematically shown is a surface (314) of a weed or plant (101) with a gas or a mixture of gases comprising steam (102) surrounding and contacting the surface (314).

Thermal energy can be transported through gas by conduction and also by the movement of the gas from one region to another. This process of heat or energy transfer associated with gas movement is usually referred to as convection. When the gas motion is caused only by buoyancy forces set up by temperature differences, the process is normally referred to as natural or free convection; but if the gas motion is caused by some other mechanism, it is usually referred to as forced convection. With a condition of forced convection there will be a laminar boundary layer (311) near to the surface (314), even if there is a strong forced convection causing turbulence in the gas near the surface. The thickness of this layer is a decreasing function of the Reynolds number of the flow, so that at high flow velocities, the thickness of the laminar boundary layer (311) will decrease. When the flow becomes turbulent the layer is divided into a turbulent boundary layer (312) and a laminar sub-layer (313). For nearly all practically occurring gas flows, the flow regime will be turbulent in the entirety of the streaming volume, except for the laminar sub-layer (313) covering the surface (314) wherein the flow regime is laminar. Considering a gas molecule (315) in the laminar sub-layer (313), the velocity (316) will be substantially parallel to the surface (314) and equal to the velocity of the laminar sub-layer (313). Heat or energy transport across the laminar sub-layer will be by conduction or radiation, due to the nature of laminar flow.

Furthermore, mass transport across the laminar sub-layer will be solely by diffusion. The presence of the laminar sub-layer (313) does not provide optimal or efficient increased mass transport. Any mass transport across the sub-layer will be solely by diffusion, and therefore often be the final limiting factor in an overall mass transport.

The principal impediment to the transfer or transmission of heat, energy and/or mass from a gas to a solid surface is the boundary layer (311) of the gas, which adheres to the solid surface. Even when the motion of the gas is fully turbulent, the laminar sub-layer (313) exists and obstructs mass transport and/or heat transfer.

Figure 2b schematically illustrates a flow over a surface of a weed or the like, where the effect of applying high intensity and high power acoustic waves to/in gas surrounding or contacting the surface.

More specifically, Figure 2b illustrates the conditions when the surface (314) of a plant or weed (101) is subjected to high intensity and high power (ultrasonic) acoustic waves e.g. supplied by a gas-jet acoustic wave generator (not shown; see e.g. 301 in the other Figures). Consider a gas molecule/particle (315) in the laminar layer; the velocity (316) will be substantially parallel to the surface (314) and equal to the velocity of the laminar layer prior to applying ultrasound. In the direction of the emitted sound field to the surface (314) in Figure 2b, the oscillating velocity of the gas or steam molecule (315) has been increased significantly as indicated by arrows (317). As an example, a maximum velocity of v= 4.5 m/sec and a displacement of +/- 32 µm can be achieved where the frequency is f=22 kHz and the sound intensity = 160 dB. The corresponding (vertical) displacement in Figure 2a is substantially 0 since the molecule follows the laminar air stream along the surface. In result, the acoustic waves will establish a forced heat or energy flow and/or mass transport between the surface and the surrounding gas/steam (102) by increasing the conduction by minimizing the laminar sub-layer. The sound intensity is in one embodiment substantially 120 dB or larger. In an alternative embodiment, the sound intensity is substantially 140 dB or larger. In yet another embodiment, the sound intensity is substantially 160 dB or larger. Furthermore, the sound intensity may be selected within the range of approximately 140 - 165 or approximately 120 - 165 dB. The sound intensity may be approximately 120 to approximately 180 dB.

Therefore, the minimization or elimination of the laminar sub-layer has the effect that heat or energy transfer and mass transport between the surface (314) and the surrounding or contacting steam (102) is greatly increased, as the reduced size of the laminar sub-layer correspondingly reduces hindrance of heat or energy transfer and/or mass transport to the surface of the plant or weed (101).

This will effectively cause an enhanced reaction between the steam (102) and the plant or weed allowing e.g. for deeper penetration of the damaging or destroying energy thus more efficiently damaging or destroying, i.e. treating, the plant or weed.

Figure 3a schematically illustrates a preferred embodiment of a device (301) for generating high intensity and high power acoustic waves. Pressurized gas, here in the form of pressurized steam is passed from a tube or chamber (309) through a passage (303) defined by the outer part (305) and the inner part (306) to an opening (302), from which the gas is discharged in a jet towards a cavity (304) provided in the inner part (306). If the gas pressure is sufficiently high then oscillations are generated in the gas fed to the cavity (304) at a frequency defined by the dimensions of the cavity (304) and the opening (302). An ultrasound device of the type shown in Figure 3a is able to generate ultrasonic acoustic pressure of up to about 160 dB_{SPL} at a gas pressure of about 4 atmospheres. The ultrasound device may e.g. be made from brass, aluminum or stainless steel or in any other sufficiently hard material to withstand the acoustic pressure and temperature to which the device is subjected during use. The method of operation is also illustrated in Figure 3a, in which the generated ultrasound (104) is directed towards a surface (314) of a plant or weed (101) to be treated.

Figure 3b shows an embodiment of a high intensity and high power acoustic wave device in form of a disc-shaped disc jet. Shown is a preferred embodiment of a high intensity and high power ultrasonic acoustic wave generator (301), i.e. a so-called disc jet. The device (301) comprises an annular outer part (305) and a cylindrical inner part (306), in which an annular cavity (304) is recessed. Through an annular gas passage (303) gases - here in the form of steam - may be diffused to the annular opening (302) from which it may be conveyed to the cavity (304). The outer part (305) may be adjustable in relation to the inner part (306), e.g. by providing a thread or another adjusting device (not shown) in the bottom of the outer part (305), which further may comprise fastening means (not shown) for locking the outer part (305) in relation to the inner part (306), when the desired interval there between has been obtained. Such an ultrasound device may generate a frequency of about 22 kHz at a gas pressure of 4 atmospheres. The molecules of the gas are thus able to migrate up to 32 µm about 22,000 times per second at a maximum velocity of 4.5 m/s. These values are merely included to give an idea of the size and proportions of the ultrasound device and by no means limit of the shown embodiment.

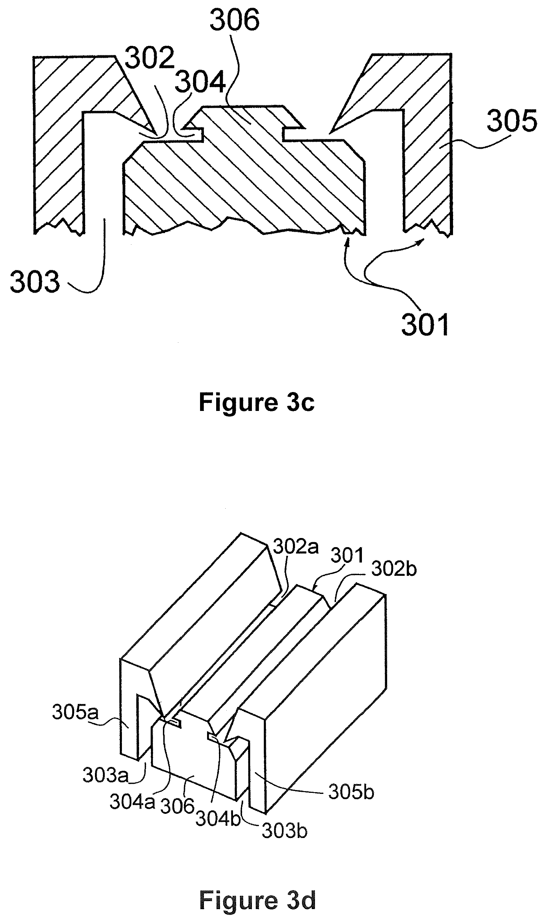

Figure 3c is a sectional view along the diameter of the high intensity and high power acoustic wave device (301) in Figure 3b illustrating the shape of the opening (302), the gas passage (303) and the cavity (304) more clearly. It is further apparent that the opening (302) is annular. The gas passage (303) and the opening (302) are defined by the substantially annular outer part (305) and the cylindrical inner part (306) arranged therein. The gas jet discharged from the opening (302) hits the substantially circumferential cavity (304) formed in the inner part (306), and then exits the ultrasound device (301). As previously mentioned the outer part (305) defines the exterior of the gas passage (303) and is further bevelled at an angle of about 30° along the outer surface of its inner circumference forming the opening of the ultrasound device, wherefrom the gas jet may expand when diffused. Jointly with a corresponding bevelling of about 60° on the inner surface of the inner circumference, the above bevelling forms an acute-angled circumferential edge defining the opening (302) externally. The inner part (306) has a bevelling of about 45° in its outer circumference facing the opening and internally defining the opening (302). The outer part (305) may be adjusted in relation to the inner part (306), whereby the pressure of the gas jet hitting the cavity (304) may be adjusted. The top of the inner part (306), in which the cavity (304) is recessed, is also bevelled at an angle of about 45° to allow the oscillating gas jet to expand at the opening of the ultrasound device.

Figure 3d illustrates an alternative embodiment of a high intensity and high power acoustic wave device, which is shaped as an elongated body. Shown is an ultrasonic high intensity and high power acoustic wave generator comprising an elongated substantially rail-shaped body (301), where the body is functionally equivalent with the embodiments shown in Figures 3a and 3b, respectively. In this embodiment the outer part comprises two separate rail-shaped portions (305a) and (305b), which jointly with the rail-shaped inner part (306) form an ultrasound device (301). Two gas passages (303a) and (303b) are provided between the two portions (305a) and (305b) of the outer part (305) and the inner part (306). Each of said gas passages has an opening (302a), (302b), respectively, conveying emitted gas from the gas passages (303a) and (303b) to two cavities (304a), (304b) provided in the inner part (306). One advantage of this embodiment is that a rail-shaped body is able to coat a far larger surface area than a circular body. Another advantage of this embodiment is that the ultrasound device may be made in an extruding process, whereby the cost of materials is reduced.

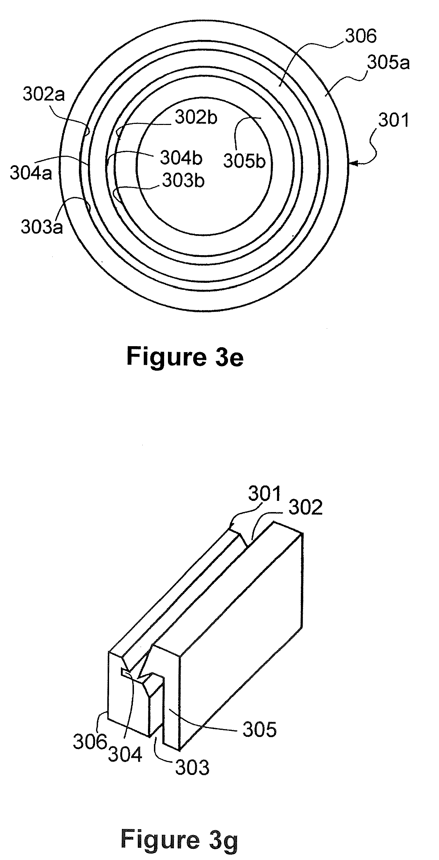

Figure 3e shows a high intensity and high power acoustic wave device of the same type as in Figure 3d but shaped as a closed curve. The embodiment of the gas device shown in Figure 3d does not have to be rectilinear. Figure 3e shows a rail-shaped body (301) shaped as three circular, separate rings. The outer ring defines an outermost part (305a), the middle ring defines the inner part (306) and the inner ring defines an innermost outer part (305b). The three parts of the ultrasound device jointly form a cross section as shown in the embodiment in Figure 3d, wherein two cavities (304a) and (304b) are provided in the inner part, an wherein the space between the outermost outer part (305a) and the inner part (306) defines an outer gas passage (303a) and an outer opening (302a), respectively, and the space between the inner part (306) and the innermost outer part (305b) defines an inner gas passage (304b) and an inner opening (302b), respectively. This embodiment of an ultrasound device is able to coat a very large area at a time and thus treat the surface of large objects.

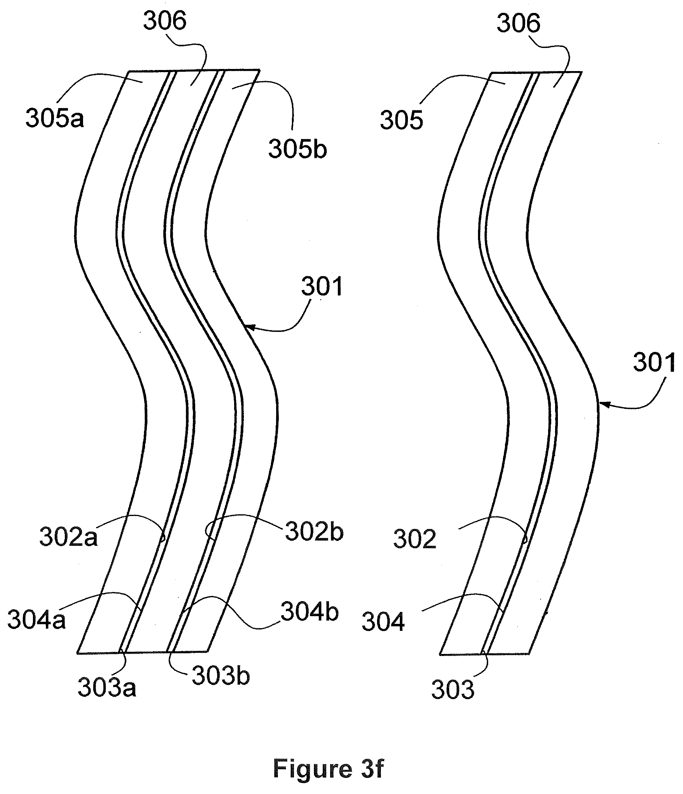

Figure 3f shows a high intensity and high power acoustic wave device of the same type as in Figure 3d but shaped as an open curve. As shown it is also possible to form an ultrasonic high intensity and high power acoustic wave generator of this type as an open curve. In this embodiment the functional parts correspond to those shown in Figure 3d and other details appear from this portion of the description for which reason reference is made thereto. Likewise it is also possible to form an ultrasonic high intensity and high power acoustic wave generator with only one opening as described in Figure 3b. An ultrasonic high intensity and high power acoustic wave generator shaped as an open curve is applicable where the surfaces of the treated object have unusually shapes. A system is envisaged in which a plurality of ultrasonic high intensity and high power acoustic wave generators shaped as different open curves are arranged in an apparatus according to the invention.

Figure 3g illustrates an alternative embodiment of a high intensity and high power acoustic wave device, which is shaped as an elongated body. This embodiment correspond to the embodiment of Figure 3d but 'cut in half'.

Figure 4 schematically illustrates one embodiment of a unit or platform comprising a device for weed killing according to the present invention. Shown are four high intensity and high power acoustic wave generators (100) that receive a pressurized gas of steam from a steam generator (not shown) via appropriate tubing (401). The particular used tubing (401) can be of any appropriate shape and form and the individual acoustic generators (100) need not be connected to the same steam generator but can be connected to different ones. Additionally, the unit can comprise any number being 1 or larger of acoustic wave generators.

Also shown in this particular embodiment is a top-covered frame (402) or the like. The illustrated unit is in the Figure seen from below. During use or when mounted or held it would be used the other way around. The frame construction serves to create an open or half-open chamber where the applied steam being jetted from the acoustic generators (100) will be able to reside under the 'roof' of the frame and thereby avoid being dissipated rapidly. This allows the steam to work as a wet and hot 'blanket' on the vegetation for an extended time and will in turn save on steam consumption. Additionally, the frame may also retain a high amount of acoustic energy within the device/frame.

The unit may e.g. be a mobile unit, i.e. supplied with wheels or the like or be mounted on a moving platform, or a portable unit.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

In the system and device claims enumerating several means, several of these means can be embodied by one and the same physical entity. The mere fact that certain measures are recited in mutually different dependent claims does not indicate that a combination of these measures cannot be used to advantage.

## Claims

1. A method of damaging and/or killing plant vegetation by surface treatment thereof, the method comprising:
- treating a surface area (101) comprising plant vegetation to be treated, wherein the treating comprises:
- applying steam of a gas (103) to at least a part of said surface area (101), and
- applying high intensity and high power acoustic waves (104) to at least a part of said surface area (101),
wherein said high intensity and high power acoustic waves (104) are generated by a high intensity and high power acoustic wave generator (100; 301) and has an acoustic sound pressure level at approximately 10 cm from the orifice of said generator (100; 301) of at least 120 dB; and
wherein at least a part of said applied steam (103) and at least a part of said applied acoustic waves (104) are brought to coincide within said surface area (101) thereby damaging and/or killing at least a part of said plant vegetation.

2. A method according to claim 1, wherein said high intensity and high power acoustic waves are ultrasonic acoustic waves.

3. The method according to any one of claims 1 - 2, wherein the acoustic sound pressure level is selected from the group of:
- at least 140 dB,
- at least 160 dB,
- approximately 120 to approximately 165 dB, and
- approximately 120 to approximately 180 dB.

4. A method according to any one of claims 1 - 3, wherein said steam (103) is aqueous steam.

5. The method according to any one of claims 1 - 4, wherein steam (103) and high intensity and high power acoustic waves (104) are applied by the same high intensity and high power acoustic wave generator (301).

6. The method according to any one of claims 1 - 4, wherein said steam (103) and said high intensity and high power acoustic waves (104) are generated and applied by different devices (100; 102).

7. The method according to any one of claims 1 - 6, wherein a treatment period of time is selected from the group of:
- ¼ to 15 seconds, and
- ½ to 3 seconds.

8. The method according to any one of claims 1 - 7, wherein said high intensity and high power acoustic waves (104) are generated by at least one high intensity and high power acoustic wave generator (100; 301).

9. The method according to any one of claims 1 - 8, wherein the high intensity and high power acoustic wave generator (100; 301) is located on a mobile unit.

10. The method according to any one of claims 1 - 9, wherein the at least one high intensity and high power acoustic wave generator (100; 301) is mounted in a frame construction (402) comprising an open chamber reducing a dissipation rate of said steam from said frame construction (402).

11. A device for damaging and/or killing plant vegetation by surface treatment thereof, the device comprising:
- a steam applicator (102; 301) adapted to, during use, to apply steam of a gas (103) to at least a part of a surface area (101) comprising plant vegetation to be treated, and
- at least one high intensity and high power acoustic wave generator (100; 301) adapted, during use, to apply high intensity and high power acoustic waves (104) to at least a part of said surface area (101), with an acoustic sound pressure level of at least 120 dB at approximately 10 cm from an orifice of the generator (100; 301);
wherein at least a part of said applied steam (103) and at least a part of said applied acoustic waves (104) are brought to coincide within said surface area (101) thereby damaging and/or killing at least a part of said plant vegetation.

12. A device according to claim 11, wherein said high intensity and high power acoustic waves are ultrasonic acoustic waves.

13. The device according to any one of claims 11 - 12, wherein the acoustic sound pressure level is selected from the group of:
- at least 140 dB,
- at least 160 dB,
- approximately 120 to approximately 165 dB, and
- approximately 120 to approximately 180 dB.

14. A device according to any one of claims 11 - 13, wherein said steam (103) is aqueous steam.

15. The device according to any one of claims 11 - 14, wherein steam (103) and high intensity and high power acoustic waves (104) are applied by the same high intensity and high power acoustic wave generator (301).

16. The device according to any one of claims 11 - 14, wherein steam (103) and high intensity and high power acoustic waves (104) are generated and applied by different devices (100; 102).

17. The device according to any one of claims 11 - 16, wherein a treatment period of time is selected from the group of:
- ¼ to 15 seconds, and
- ½ to 3 seconds.

18. The device according to any one of claims 11 - 17, wherein the at least one high intensity and high power acoustic wave generator (100; 301) are located on a mobile unit.

19. The device according to any one of claims 11 - 18, wherein the at least one high intensity and high power acoustic wave generator (100; 301) is mounted in a frame construction (402) comprising an open chamber reducing a dissipation rate of said steam from said frame construction (402).

## Patentansprüche

1. Verfahren zur Zerstörung und/oder Tötung von Pflanzenbewuchs durch Oberflächenbehandlung davon, welches Verfahren umfasst
- Behandlung eines Oberflächenbereichs (101) umfassend zu behandelnden Pflanzenbewuchs,
wobei die Behandlung umfasst:
- Aufbringen von Dampf eines Gases (103) auf zumindest einen Teil des Oberflächenbereichs (101) und
- Aufbringen von Schallwellen (104) mit hoher Intensität und hoher Leistung auf zumindest einen Teil des Oberflächenbereichs (101),
-wobei die Schallwellen (104) mit hoher Intensität und hoher Leistung durch einen Schallwellengenerator (100; 301) mit hoher Intensität und hoher Leistung erzeugt werden und in einem Abstand von etwa 10 cm von der Öffnung des Generators (100; 301) einen Schalldruckpegel von zumindest 120 dB aufweisen, und
wobei zumindest ein Teil des aufgebrachten Dampfes (103) und zumindest ein Teil der aufgebrachten Schallwellen (104) dazu gebracht werden, mit dem Oberflächenbereich (101) zusammenzufallen, wodurch zumindest ein Teil des Pflanzenbewuchses zerstört und/oder getötet wird.

2. Verfahren nach Anspruch 1, wobei die Schallwellen mit hoher Intensität und hoher Leistung Ultraschallwellen sind.

3. Verfahren nach einem der Ansprüche 1 bis 2, wobei der Schalldruckpegel aus der Gruppe aus:
- zumindest 140 dB,
- zumindest 160 dB,
- etwa 120 bis etwa 165 dB und
- etwa 120 bis etwa 180 dB ausgewählt wird.

4. Verfahren nach einem der Ansprüche 1 bis 3, wobei der Dampf (103) Wasserdampf ist.

5. Verfahren nach einem der Ansprüche 1 bis 4, wobei der Dampf (103) und die Schallwellen (104) mit hoher Intensität und hoher Leistung durch den gleichen Schallwellengenerator (301) mit hoher Intensität und hoher Leistung aufgebracht werden.

6. Verfahren nach einem der Ansprüche 1 bis 4, wobei der Dampf (103) und die Schallwellen (104) mit hoher Intensität und hoher Leistung durch unterschiedliche Vorrichtungen (100; 102) erzeugt und aufgebracht werden.

7. Verfahren nach einem der Ansprüche 1 bis 6, wobei ein Behandlungszeitraum aus der Gruppe aus:
- ¼ bis 15 Sekunden und
- ½ bis 3 Sekunden ausgewählt wird.

8. Verfahren nach einem der Ansprüche 1 bis 7, wobei die Schallwellen (104) mit hoher Intensität und hoher Leistung durch zumindest einen Schallwellengenerator (100; 301) mit hoher Intensität und hoher Leistung erzeugt werden.

9. Verfahren nach einem der Ansprüche 1 bis 8, wobei der Schallwellengenerator (100; 301) mit hoher Intensität und hoher Leistung auf einer mobilen Einheit angeordnet ist.

10. Verfahren nach einem der Ansprüche 1 bis 9, wobei der zumindest eine Schallwellengenerator (100; 301) mit hoher Intensität und hoher Leistung in eine Rahmenkonstruktion (402) eingebaut wird, umfassend eine offene Kammer, welche eine Dissipationsrate des Dampfes aus der Rahmenkonstruktion (402) vermindert.

11. Vorrichtung zur Zerstörung und/oder Tötung von Pflanzenbewuchs durch Oberflächenbehandlung davon, welche Vorrichtung umfasst:
- einen Dampfapplikator (102; 301), welcher während des Gebrauchs dazu ausgebildet ist, Dampf eines Gases (103) auf zumindest einen Teil eines Oberflächenbereichs (101), umfassend zu behandelnden Pflanzenbewuchs, aufzubringen, und
- zumindest einen Schallwellengenerator (100; 301) mit hoher Intensität und hoher Leistung, welcher während des Gebrauchs dazu ausgebildet ist, Schallwellen (104) mit hoher Intensität und hoher Leistung auf zumindest einen Teil des Oberflächenbereichs (101), mit einem Schalldruckpegel von zumindest 120 dB von ungefähr 10 cm von einer Öffnung des Generators (100; 301), aufzubringen;
wobei zumindest ein Teil des aufgebrachten Dampfes (103) und zumindest ein Teil der aufgebrachten Schallwellen (104) dazu gebracht werden, mit dem Oberflächenbereich (101) zusammenzufallen, wodurch zumindest ein Teil des Pflanzenbewuchses zerstört und/oder getötet wird.

12. Vorrichtung nach Anspruch 11, wobei die Schallwellen mit hoher Intensität und hoher Leistung Ultraschallwellen sind.

13. Vorrichtung nach einem der Ansprüche 11 bis 13, wobei der Schalldruckpegel aus der Gruppe aus:
- zumindest 140 dB,
- zumindest 160 dB,
- etwa 120 bis etwa 165 dB und
- etwa 120 bis etwa 180 dB ausgewählt wird.

14. Vorrichtung nach einem der Ansprüche 11 bis 13, wobei der Dampf (103) Wasserdampf ist.

15. Vorrichtung nach einem der Ansprüche 11 bis 14, wobei der Dampf (103) und die Schallwellen (104) mit hoher Intensität und hoher Leistung durch den gleichen Schallwellengenerator (301) mit hoher Intensität und hoher Leistung aufgebracht werden.

16. Vorrichtung nach einem der Ansprüche 11 bis 14, wobei der Dampf (103) und die Schallwellen (104) mit hoher Intensität und hoher Leistung durch unterschiedliche Vorrichtungen (100; 102) erzeugt und aufgebracht werden.

17. Vorrichtung nach einem der Ansprüche 11 bis 16, wobei ein Zeitbehandlungszeitraum aus der Gruppe aus:
- ¼ bis 15 Sekunden und
- ½ bis 3 Sekunden ausgewählt wird.

18. Vorrichtung nach einem der Ansprüche 11 bis 17, wobei der zumindest eine Schallwellengenerator (100; 301) mit hoher Intensität und hoher Leistung auf einer mobilen Einheit angeordnet ist.

19. Vorrichtung nach einem der Ansprüche 11 bis 18, wobei der zumindest eine Schallwellengenerator (100; 301) mit hoher Intensität und hoher Leistung in eine Rahmenkonstruktion (402) eingebaut ist, umfassend eine offene Kammer, welche eine Dissipationsrate des Dampfes aus der Rahmenkonstruktion (402) vermindert.

## Revendications

1. Procédé de dégradation et/ou d'élimination de végétation de plantes par un traitement de surface de celle-ci, le procédé comprenant
- le traitement d'une zone de surface (101) comprenant la végétation de plantes à traiter,
dans lequel le traitement comprend :
- l'application d'une vapeur d'un gaz (103) sur au moins une partie de ladite zone de surface (101), et
- l'application d'ondes acoustiques à haute intensité et haute puissance (104) à au moins une partie de ladite zone de surface (101),
dans lequel lesdites ondes acoustiques à haute intensité et haute puissance (104) sont générées par un générateur d'ondes acoustiques à haute intensité et haute puissance (100 ; 301) et possèdent un niveau de pression sonore acoustique approximativement à 10 cm de l'orifice dudit générateur (100 ; 301) d'au moins 120 dB ; et
dans lequel au moins une partie de ladite vapeur appliquée (103) et au moins une partie desdites ondes acoustiques appliquées (104) sont amenées à coïncider à l'intérieur de ladite zone de surface (101), ce qui dégrade et/ou tue au moins une partie de ladite végétation de plantes.

2. Procédé selon la revendication 1, dans lequel lesdites ondes acoustiques à haute intensité et haute puissance sont des ondes acoustiques ultrasonores.

3. Procédé selon l'une quelconque des revendications 1 à 2, dans lequel le niveau de pression sonore acoustique est choisi dans le groupe :
- d'au moins 140 dB,
- d'au moins 160 dB,
- d'environ 120 à environ 165 dB, et
- d'environ 120 à environ 180 dB.

4. Procédé selon l'une quelconque des revendications 1 à 3, dans lequel ladite vapeur (103) est une vapeur aqueuse.

5. Procédé selon l'une quelconque des revendications 1 à 4, dans lequel la vapeur (103) et les ondes acoustiques à haute intensité et haute puissance (104) sont appliquées par le même générateur d'ondes acoustiques à haute intensité et haute puissance (301).

6. Procédé selon l'une quelconque des revendications 1 à 4, dans lequel ladite vapeur (103) et lesdites ondes acoustiques à haute intensité et haute puissance (104) sont générées et appliquées par des dispositifs différents (100 ; 102).

7. Procédé selon l'une quelconque des revendications 1 à 6, dans lequel une période de traitement est choisie dans le groupe de :
- ¼ à 15 secondes, et
- ½ à 3 secondes.

8. Procédé selon l'une quelconque des revendications 1 à 7, dans lequel lesdites ondes acoustiques à haute intensité et haute puissance (104) sont générées par au moins un générateur d'ondes acoustiques à haute intensité et haute puissance (100 ; 301).

9. Procédé selon l'une quelconque des revendications 1 à 8, dans lequel le générateur d'ondes acoustiques à haute intensité et haute puissance (100 ; 301) est situé sur une unité mobile.

10. Procédé selon l'une quelconque des revendications 1 à 9, dans lequel l'au moins un générateur d'ondes acoustiques à haute intensité et haute puissance (100 ; 301) est monté dans une construction de châssis (402) comprenant une chambre ouverte réduisant un taux de dissipation de ladite vapeur à partir de ladite construction de châssis (402).

11. Dispositif de dégradation et/ou d'élimination de végétation de plantes par un traitement de surface de celle-ci, le dispositif comprenant
- un applicateur de vapeur (102 ; 301) adapté pour, pendant l'utilisation, appliquer une vapeur d'un gaz (103) sur au moins une partie d'une zone de surface (101) comprenant une végétation de plantes à traiter, et
- au moins un générateur d'ondes acoustiques à haute intensité et haute puissance (100 ; 301) adapté pour, pendant l'utilisation, appliquer des ondes acoustiques à haute intensité et haute puissance (104) à au moins une partie de ladite zone de surface (101), avec un niveau de pression sonore acoustique d'au moins 120 dB à approximativement 10 cm d'un orifice du générateur (100 ; 301) ;
dans lequel au moins une partie de ladite vapeur appliquée (103) et au moins une partie desdites ondes acoustiques appliquées (104) sont amenées à coïncider à l'intérieur de ladite zone de surface (101), ce qui dégrade et/ou tue au moins une partie de ladite végétation de plantes.

12. Dispositif selon la revendication 11, dans lequel lesdites ondes acoustiques à haute intensité et haute puissance sont des ondes acoustiques ultrasonores.

13. Dispositif selon l'une quelconque des revendications 11 à 12, dans lequel le niveau de pression sonore acoustique est choisi dans le groupe :
- d'au moins 140 dB,
- d'au moins 160 dB,
- d'environ 120 à environ 165 dB, et
- d'environ 120 à environ 180 dB.

14. Dispositif selon l'une quelconque des revendications 11 à 13, dans lequel ladite vapeur (103) est une vapeur aqueuse.

15. Dispositif selon l'une quelconque des revendications 11 à 14, dans lequel la vapeur (103) et les ondes acoustiques à haute intensité et haute puissance (104) sont appliquées par le même générateur d'ondes acoustiques à haute intensité et haute puissance (301).

16. Dispositif selon l'une quelconque des revendications 11 à 14, dans lequel la vapeur (103) et les ondes acoustiques à haute intensité et haute puissance (104) sont générées et appliquées par des dispositifs différents (100 ; 102).

17. Dispositif selon l'une quelconque des revendications 11 à 16, dans lequel une période de traitement est choisie dans le groupe de :
- ¼ à 15 secondes, et
- ½ à 3 secondes.

18. Dispositif selon l'une quelconque des revendications 11 à 17, dans lequel l'au moins un générateur d'ondes acoustiques à haute intensité et haute puissance (100 ; 301) est situé sur une unité mobile.

19. Dispositif selon l'une quelconque des revendications 11 à 18, dans lequel l'au moins un générateur d'ondes acoustiques à haute intensité et haute puissance (100 ; 301) est monté dans une construction de châssis (402) comprenant une chambre ouverte réduisant un taux de dissipation de ladite vapeur à partir de ladite construction de châssis (402).
